# EUROPEAN PATENT SPECIFICATION

(11) **EP 4 283 316 B1**
(45) Date of publication and mention of the grant of the patent: **01.10.2025**
(21) Application number: 21928531.9
(22) Date of filing: 04.03.2021
(51) Int. Cl.: H02J 7/00, H02J 1/10, B60L 3/00, B60L 53/22

(54) **DETECTION CIRCUIT, BACKFLOW PREVENTION SYSTEM, AND CHARGING PILE**
DETEKTIONSSCHALTUNG, RÜCKFLUSSVERHINDERUNGSSYSTEM UND LADESÄULE
CIRCUIT DE DÉTECTION, SYSTÈME ANTI-REFLUX ET PILE DE CHARGE

(43) Date of publication of application: 29.11.2023
(73) Proprietor: Huawei Digital Power Technologies Co., Ltd., Shenzhen, Guangdong 518043 (CN)
(72) Inventor: JIANG, Zhenting, Shenzhen, Guangdong 518129 (CN); CHEN, Jiansheng, Shenzhen, Guangdong 518129 (CN); LIU, Yaping, Shenzhen, Guangdong 518129 (CN); XIONG, Jianhui, Shenzhen, Guangdong 518129 (CN)
(74) Representative: Isarpatent
(86) International application number: PCT/CN2021/079123
(87) International publication number: WO 2022/183446

(56) References cited:
- CN-A- 103 138 240
- CN-A- 103 926 516
- CN-A- 107 976 616
- CN-A- 111 965 515
- CN-B- 103 119 823
- CN-B- 106 505 846
- CN-B- 106 696 736
- CN-U- 206 348 428
- JP-A- 2015 018 838
- JP-A- S63 142 274
- KR-B1- 101 466 305

## Description

### TECHNICAL FIELD

This disclosure generally relates to the technical field of electric vehicles, and the invention in particular relates to a detection circuit, an anti-backflow system, and a charging pile.

### BACKGROUND

With popularization of electric vehicles, people have an increasingly high requirement on a charging speed of an electric vehicle. To meet a requirement for fast charging of an electric vehicle, an increasingly large quantity of electric vehicles are provided with high-voltage battery packs as power batteries. During charging of an electric vehicle, the electric vehicle may be electrically connected to a charging pile, and a high-voltage battery pack in the electric vehicle may receive and store electric energy provided by the charging pile.

However, with popularization of high-voltage battery packs in electric vehicles, a battery voltage of a high-voltage battery pack may be higher than an output voltage of a charging pile. Therefore, in a charging process of an electric vehicle, a power battery (a high-voltage battery pack) in the electric vehicle may output electric energy to a charging pile (that is, backflow). This may cause damage to a safety device in the electric vehicle. In view of this, the charging pile needs to be provided with an anti-backflow circuit. The anti-backflow circuit is a unidirectional transmission circuit. An output end of the anti-backflow circuit can only be used to output electric energy to an output interface of the charging pile, and electric energy cannot be received from an output interface of the anti-backflow circuit. Therefore, the anti-backflow circuit can prevent the power battery from outputting electric energy to the charging pile.

Because the anti-backflow circuit is related to charging safety of the electric vehicle, the charging pile needs to stop outputting electric energy in time when the anti-backflow circuit fails. However, accuracy of a conventional technology for failure detection of an anti-backflow circuit is relatively low, and the technology for failure detection of an anti-backflow circuit needs to be further studied.

JP S63 1422774 A addresses the general technical problem of ensuring the reliability of power supply systems, especially those requiring uninterrupted power, like in computing devices. In systems with multiple power supplies connected in parallel to a load bus, diodes are used to prevent reverse current flow from the load bus back to the power supplies. However, when these diodes fail (either by becoming open or short-circuited), it can go unnoticed until there's an actual power supply abnormality. The solution provided here consists of incorporating a diode failure detection circuit into the power supply device. This circuit allows for the detection of diode failures even when the power supply is operating normally, thereby significantly enhancing the reliability of an uninterrupted power supply.

CN 106 696 736 B addresses as main technical problem the potential safety hazards associated with charging pathways in direct current (DC) charging systems, especially relevant to electric vehicle charging. These charging pathways often utilize relays and electronic components that are prone to damage such as relay adhesion (sticking) or failure, which can lead to safety risks during the charging process. To solve this problem, it is proposed here to provide a DC charging system, including a specially designed power distribution module, a path detection method, and a charging method for electric vehicles that collectively aim to enhance the safety of the charging process. The key features of the solution include a power distribution module, dual types of switches, a parallel switch configuration, and sampling units to carry out path detection method for detecting whether any switch within a charging path is stuck or has failed. This method involves controlling the switches in specific configurations and comparing the output charging voltage to the sampled voltage to determine the operational status of the switches. This proactive detection helps in identifying and mitigating potential safety risks before they escalate.

### SUMMARY

The object of the present invention is to provide a detection circuit, an anti-backflow system, and a charging pile, to improve accuracy of failure detection of an anti-backflow circuit. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, although not explicitly part of the claimed subject-matter, are not incompatible with it.

According to a first aspect, this invention provides a detection circuit with the technical features of independent claim 1.

In this invention, the first level signal is generated based on the detection current. The detection circuit only needs to distinguish whether there is a detection current, and does not need to further detect the detection current. Therefore, a detection result of the detection circuit provided in this application may not depend on detection precision of a voltage value. This helps improve accuracy of failure detection of the anti-backflow circuit. In addition, the detection circuit provided in this application does not depend on an input voltage and an output voltage of the anti-backflow circuit to perform detection. Therefore, the detection circuit may perform failure detection before a charging pile is connected to a power battery. This further helps protect safety of an electric vehicle.

Corresponding to the first level signal, the digital unit according to the invention may further output a second level signal when the digital unit does not transmit a detection current, where the second level signal may indicate that the anti-backflow circuit does not fail. For example, if the first level signal is a high-level signal, the second level signal is a low-level signal. For another example, if the first level signal is a low-level signal, the second level signal is a high-level signal. In other words, the digital unit may output a digital signal. When the digital signal is at a first level, it may indicate that the anti-backflow circuit fails; and when the digital signal is at a second level, it may indicate that the anti-backflow circuit does not fail.

For example, the digital unit includes a current input end, a current output end, and a signal output end; a positive electrode of the detection power supply is connected to the current input end of the digital unit, and a negative electrode of the detection power supply is connected to the first end of the detection circuit; the current output end of the digital unit is connected to the second end of the detection circuit; and the signal output end of the digital unit may output the first level signal.

It should be understood that, another possible structure may alternatively be connected in series between the digital unit and the detection unit. This is not limited in embodiments of this application.

To prolong a service life of the detection circuit, in a possible implementation, the detection circuit may further include a breaking circuit, and the breaking circuit is connected in series to both the detection power supply and the digital unit. The breaking circuit may be connected during failure detection of the anti-backflow circuit, and may be disconnected when the failure detection ends.

For example, the breaking circuit may be located between the detection power supply and the digital unit, one end of the breaking circuit is connected to the detection power supply, and the other end of the breaking circuit is connected to the digital unit. It may be understood that, another possible structure may alternatively be connected in series between two of the breaking circuit, the detection power supply, and the digital unit. These are not listed in embodiments of this application one by

In this embodiment of this application, the breaking circuit may be connected during failure detection of the anti-backflow circuit, so that a current loop can be formed between the first end and the second end of the detection circuit when the anti-backflow circuit fails. The breaking circuit may also be disconnected after failure detection of the anti-backflow circuit ends. This helps prolong the service life of the detection circuit.

To protect the detection circuit, the detection circuit according to the invention includes a detection diode, and the detection diode is connected in series to both the detection power supply and the digital unit. An anode of the detection diode receives the detection current, and a cathode of the detection diode outputs the detection current. In other words, the detection diode does not block transmission of the detection current. However, during backflow of a power battery to the detection circuit, when no detection diode is disposed, a backflow current is input from the second end of the detection circuit, and is output from the first end of the detection circuit. Therefore, in this application, the detection diode may be disposed to block transmission of the backflow current in the detection circuit. This helps prevent backflow of the power battery to the detection circuit.

To protect the digital unit, in a possible implementation, the detection circuit may further include a detection resistor, and the detection resistor is connected in series to both the detection power supply and the digital unit. The detection resistor may be disposed to perform current limiting on the detection current. This helps prevent the digital unit from being damaged due to an excessively large detection current.

The digital unit may use an isolation structure to enhance anti-electromagnetic interference performance. Specifically, the digital unit includes a primary-side circuit and a secondary-side circuit, and the secondary-side circuit and the primary-side circuit are isolated from each other. The primary-side circuit may transmit the detection current, and the secondary-side circuit may output the first level signal when the primary-side circuit transmits the detection current.

Specifically, the input end of the anti-backflow circuit is usually connected to an electromagnetic interference EMI filter circuit. The EMI filter circuit may filter out electromagnetic interference in direct current electric power, to reduce electromagnetic interference in direct current electric power output by the anti-backflow circuit. However, in this application, because the second end of the detection circuit is connected to the output end of the anti-backflow circuit, some electromagnetic interference may bypass the EMI filter circuit by using the digital unit, to be directly output from the output end of the anti-backflow circuit. In view of this, the digital unit in this application may use an isolation structure to block a path used for transmitting electromagnetic interference to the anti-backflow circuit. This helps reduce the electromagnetic interference in the direct current electric power output by the anti-backflow circuit, and enhances anti-electromagnetic interference performance.

For example, although the primary-side circuit and the secondary-side circuit are isolated from each other, coupling in a form of an energy field, for example, optical coupling, magnetic coupling, or electric field coupling, may be implemented between the primary-side circuit and the secondary-side circuit. When the detection current passes through the primary-side circuit, the secondary-side circuit may sense an energy change in the primary-side circuit by using an energy field, to generate the first level signal.

Using optical coupling as an example, the primary-side circuit includes a light-emitting diode, an anode of the light-emitting diode may receive the detection current, a cathode of the light-emitting diode may output the detection current, and the light-emitting diode may emit light when transmitting the detection current; and the secondary-side circuit may include a light-sensing switching transistor, and the light-sensing switching transistor may be turned on when the light-emitting diode emits light, so that the secondary-side circuit outputs the first level signal.

Generally, a signal acquisition circuit may output an acquired signal to a control circuit, and the control circuit further processes the signal acquired by the signal acquisition circuit. The control circuit is a digital circuit, and may process a digital signal. However, a level signal output by the digital unit may be difficult to be identified by the control circuit due to an irregular waveform. In view of this, the detection circuit may further include a signal acquisition circuit. The signal acquisition circuit may perform shaping filtering on the first level signal output by the digital unit. After shaping filtering is performed, a waveform of a digital signal output by the digital unit is more regular, so that the control circuit can identify the first level signal more accurately.

According to a second aspect, this invention further provides an anti-backflow system. The anti-backflow system mainly includes an anti-backflow circuit and the detection circuit provided in any implementation of the first aspect. A first end of the detection circuit is connected to a high-electric-potential input end of the anti-backflow circuit, and a second end of the detection circuit is connected to a high-electric-potential output end of the anti-backflow circuit.

According to a third aspect, this invention also provides a charging pile. The charging pile mainly includes a conversion circuit and the anti-backflow system provided in the second aspect. The conversion circuit may convert received alternating current electric power into direct current electric power, and output the converted direct current electric power to an anti-backflow circuit. Then, the anti-backflow circuit may output the direct current electric power. For example, the direct current electric power may be output to an electric vehicle as charging electric energy, so that the electric vehicle can be charged.

In a possible implementation, the charging pile may further include a control circuit. The control circuit is connected to both the conversion circuit and a digital unit. After receiving a first level signal output by the digital unit, the control circuit may prohibit the conversion circuit from outputting direct current electric power to the anti-backflow circuit. This helps prevent backflow of a power battery in the electric vehicle.

These aspects or other aspects of this application are more readily apparent from the following description of embodiments.

### BRIEF DESCRIPTION OF DRAWINGS

FIG. 1 is a schematic diagram of a charging system;
FIG. 2 is a schematic diagram of a structure of a charging module;
FIG. 3 is a schematic diagram of a failure detection architecture of an anti-backflow circuit;
FIG. 4 is a schematic diagram of a structure of a detection circuit according to an embodiment which is not part of the invention but is included in this description because of illustrative purposes;
FIG. 5 is a schematic diagram of a specific structure of a detection circuit according to an embodiment of the invention;
FIG. 6a and FIG. 6b are schematic diagrams of circuit statuses of a detection circuit when an anti-backflow circuit does not fail according to an embodiment of the invention;
FIG. 7a and FIG. 7b are schematic diagrams of circuit statuses of a detection circuit when an anti-backflow circuit fails according to an embodiment of the invention; and
FIG. 8 is a schematic diagram of a structure of an isolation unit according to an embodiment of the invention.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that the "connection" in embodiments of this application may be understood as an electric connection, and a connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

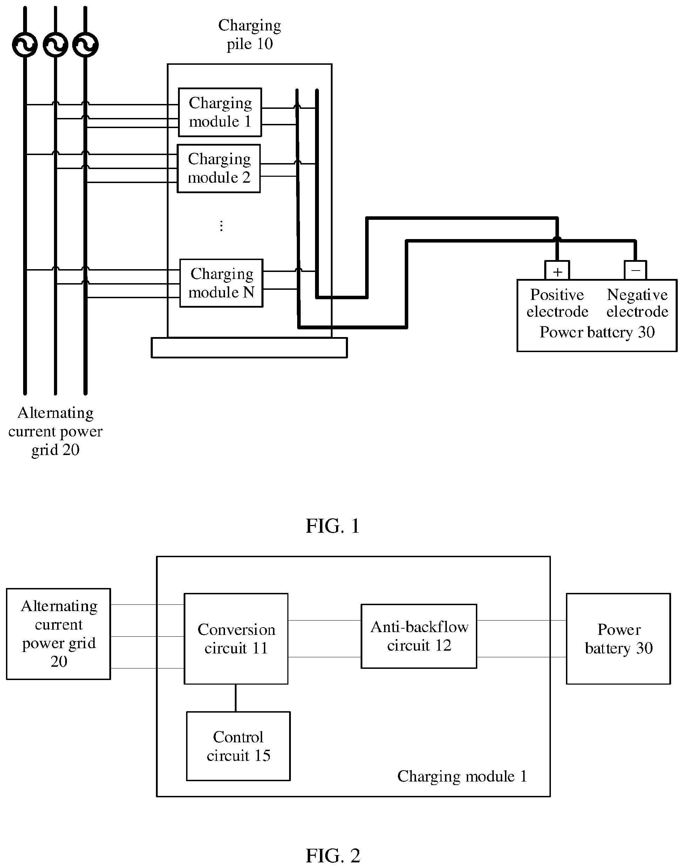

Currently, an electric vehicle is charged by mainly depending on a charging pile. FIG. 1 is a schematic diagram of an example of a charging system in which a charging pile charges a power battery. As shown in FIG. 1, a charging pile 10 is connected to both an alternating current power grid 20 and a power battery 30. The alternating current power grid 20 may provide alternating current electric power to the charging pile 10, and the charging pile 10 may convert the received alternating current electric power, and provide converted electric energy to the power battery 30. The power battery 30 receives and stores the electric energy provided by the charging pile 10, to implement charging.

In FIG. 1, the power battery 30 may be disposed in an electric vehicle to provide energy to the electric vehicle, so that the electric vehicle works. To meet a requirement for fast charging of the electric vehicle, the charging pile 10 may provide a high-power direct current to the power battery 30 for charging. To be specific, the charging pile 10 may receive the alternating current electric power provided by the alternating current power grid 20, convert the alternating current electric power into direct current electric power, and output the direct current electric power to the power battery 30; and power of the direct current electric power is relatively high.

As shown in FIG. 1, the charging pile 10 may include N charging modules (a charging module 1, a charging module 2, ..., and a charging module N), where N is an integer greater than or equal to 1. The N charging modules are connected in parallel between the alternating current power grid 20 and the power battery 30, and each charging module may receive alternating current electric power from the alternating current power grid 20, convert the alternating current electric power into direct current electric power, and provide the converted direct current electric power to the power battery 30. In this case, a total output power of the charging pile 10 may be a sum of output powers of the N charging modules.

For example, currently, the total output power of the charging pile 10 mainly includes three types: 60 KW, 90 KW, and 120 KW. Assuming that an output power of each charging module is 15 W, quantities of charging modules in the charging pile 10 are correspondingly 4, 6, and 8.

Because an increasingly large quantity of power batteries 30 use high-voltage battery packs, the power batteries 30 have relatively high battery voltages. When a battery voltage of the power battery 30 exceeds an output voltage of the charging pile 10, the power battery 30 may output battery electric energy to the charging pile 10. This process may also be referred to as backflow of the power battery 30. During backflow of the power battery 30, a safety device (for example, a contactor or a safety wire that is in the electric vehicle and that is used to protect the power battery 30) in the electric vehicle may fail.

In addition, in the industry standard "NB/T 33001-2010 *Specification for electric vehicle off-board conductive charger",* the charging pile 10 is also required to have an anti-backflow function. In view of this, an anti-backflow circuit further needs to be disposed in each charging module to prevent backflow of the power battery 30.

The charging module 1 is used as an example. For example, as shown in FIG. 2, the charging module 1 mainly includes a conversion circuit 11 and an anti-backflow circuit 12. An input end of the conversion circuit 11 is connected to the alternating current power grid 20, an output end of the conversion circuit 11 is connected to the anti-backflow circuit 12, and an output end of the anti-backflow circuit 12 is connected to the power battery 30.

The conversion circuit 11 includes an alternating current-direct current conversion circuit. During charging of the power battery 30, the conversion circuit 11 may receive alternating current electric power provided by the alternating current power grid 20, convert the alternating current electric power into direct current electric power, and output the direct current electric power to the power battery 30 through the anti-backflow circuit 12.

It should be noted that the conversion circuit 11 may include a circuit with another function. For example, the conversion circuit 11 may further include a direct current-direct current conversion circuit. The direct current-direct current conversion circuit may be connected to an output end of the alternating current-direct current conversion circuit, so that the direct current-direct current conversion circuit can further perform voltage regulation on the direct current electric power output by the alternating current-direct current conversion circuit. For another example, the conversion circuit 11 may further include an electromagnetic interference (electromagnetic interference, EMI) filter circuit. The EMI filter circuit may filter out electromagnetic interference in the direct current electric power obtained by the conversion circuit 11 through conversion, and the like. These are not listed in embodiments of this application one by one.

The anti-backflow circuit 12 is a circuit with a unidirectional transmission function, and may be a diode or a functional circuit that can be equivalent to a diode. A diode is used as an example. An anode of the diode is connected to the conversion circuit 11, and a cathode of the diode is connected to the power battery 30. In the charging module 1 shown in FIG. 2, electric energy can be transmitted only from an input end of the anti-backflow circuit 12 (an end close to the conversion circuit 11) to an output end of the anti-backflow circuit 12 (an end close to the power battery 30).

In other words, a current can be transmitted only from a high-electric-potential output end of the conversion circuit 11 to a high-electric-potential input end of the anti-backflow circuit 12, and flows back from a low-electric-potential input end of the anti-backflow circuit 12 to a low-electric-potential output end of the conversion circuit 11. The current cannot be transmitted from the high-electric-potential input end of the anti-backflow circuit 12 to the high-electric-potential output end of the conversion circuit 11, and cannot flow back from the low-electric-potential output end of the conversion circuit 11 to a low-electric-potential input end of the conversion circuit 11 either.

Therefore, when the battery voltage of the power battery 30 exceeds an output voltage of the charging module 1, the anti-backflow circuit 12 stops the power battery 30 from discharging the charging module 1, to implement an anti-backflow function.

In conclusion, the anti-backflow circuit 12 is an important structure of a charging pile 20. When the anti-backflow circuit 12 fails, charging safety of the electric vehicle is threatened. Therefore, failure detection of the anti-backflow circuit 12 has become particularly important. That the anti-backflow circuit 12 fails may be understood as that the anti-backflow circuit 12 loses a unidirectional transmission function and electric energy may be transmitted from the output end of the anti-backflow circuit 12 to the input end of the anti-backflow circuit 12.

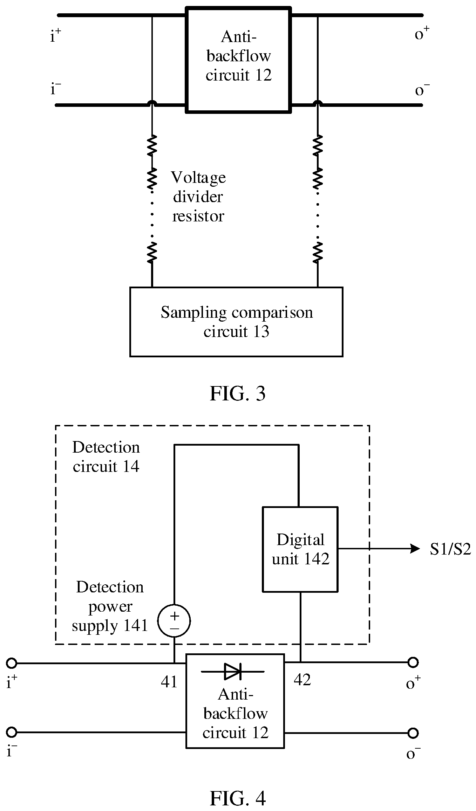

Currently, an architecture shown in FIG. 3 is usually used to perform failure detection on the anti-backflow circuit 12. As shown in FIG. 3, the charging module 1 may further include a sampling comparison circuit 13 and a plurality of voltage divider resistors. Some voltage divider resistors are connected in series between a high-electric-potential input end i⁺ of the anti-backflow circuit 12 and a first end of the sampling comparison circuit 13, and the other voltage divider resistors are connected in series between a high-electric-potential output end o⁺ of the anti-backflow circuit 12 and a second end of the sampling comparison circuit 13.

Quantities of the two parts of voltage divider resistors are the same, so that electric potentials at the first end and the second end of the sampling comparison circuit 13 can be reduced proportionally. This helps protect safety of the sampling comparison circuit 13. In addition, a relative electric potential between the first end and the second end can keep consistent with a relative electric potential between the high-electric-potential input end i⁺ and the high-electric-potential output end o⁺.

The sampling comparison circuit 13 determines, based on an electric potential difference between the first end and the second end, whether the anti-backflow circuit 12 fails. Specifically, if a difference obtained by subtracting the electric potential at the second end from the electric potential at the first end is greater than or equal to a comparison threshold, it indicates that electric energy is transmitted from the input end of the anti-backflow circuit 12 to the output end of the anti-backflow circuit 12 in this case and the anti-backflow circuit 12 does not fail. If the difference obtained by subtracting the electric potential at the second end from the electric potential at the first end is less than the comparison threshold, it indicates that the anti-backflow circuit 12 fails in this case.

However, because the output voltage of the charging module 1 is relatively high, and currently a maximum voltage may reach approximately 1000 V, electric potentials at the high-electric-potential input end i⁺ and the high-electric-potential output end o⁺ of the anti-backflow circuit 12 are relatively high. The first end and the second end of the sampling comparison circuit 13 need to be connected in series to a relatively large quantity of voltage divider resistors to reduce the electric potentials at the first end and the second end. In addition, because a voltage drop of the anti-backflow circuit 12 is relatively small, that is, a voltage between the high-electric-potential input end i⁺ and the high-electric-potential output end o⁺ is relatively small, when a relatively large quantity of voltage divider resistors are connected in series, sampling precision of the sampling comparison circuit 13 is reduced.

For example, the electric potential at the high-electric-potential input end i⁺ is 1000 V, and the electric potential at the high-electric-potential output end o⁺ is 998 V. After the voltage divider resistors perform voltage division, the electric potential at the first end of the sampling comparison circuit 13 is 10 V, and the electric potential at the second end of the sampling comparison circuit 13 is 9.98 V. In this case, the electric potential difference between the first end and the second end is only 0.02 V. If a sampling error of the sampling comparison circuit 13 is greater than 0.02 V, the sampling comparison circuit 13 cannot accurately identify whether the anti-backflow circuit 12 fails.

In addition, in the failure detection solution shown in FIG. 3, failure detection of the anti-backflow circuit 12 can be performed only after electric energy starts to be transmitted between the conversion circuit 11 and the power battery 30, in other words, failure detection of the anti-backflow circuit 12 can be performed only after the charging pile 20 starts charging the power battery 30. If the anti-backflow circuit 12 has failed before the charging pile 20 is connected to the power battery 30, a backflow risk of the power battery 30 may occur when the failure detection solution shown in FIG. 3 is used.

In view of this, an embodiment of this application provides a detection circuit. The detection circuit may perform failure detection on an anti-backflow circuit 12. This helps improve accuracy of failure detection. In addition, when a charging pile 20 is not connected to a power battery 30, the detection circuit provided in this embodiment of this application may also perform failure detection on an anti-backflow circuit 12. This helps reduce a backflow risk of the power battery 30.

For example, the detection circuit provided in this embodiment of this application may be shown in FIG. 4 This embodiment is not part of the claimed subject-matter but is included in this description because of illustrative purposes. A first end 41 of the detection circuit 14 is connected to a high-electric-potential input end i⁺ of an anti-backflow circuit, a second end 42 of the detection circuit 14 is connected to a high-electric-potential output end o⁺ of the anti-backflow circuit 12, and the detection circuit 14 may perform failure detection on the anti-backflow circuit 12.

The detection circuit 14 includes a detection power supply 141 and a digital unit 142, and the detection power supply 141 and the digital unit 142 are connected in series between the first end 41 and the second end 42 of the detection circuit 14. The detection power supply 141 is a direct current power supply, and may apply bias voltages to the first end 41 and the second end 42 of the detection circuit 14 to make an electric potential at the second end 42 of the detection circuit 14 higher than that at the first end 41 of the detection circuit 14.

In other words, a negative electrode of the detection power supply 141 is disposed close to the first end 14, and a positive electrode of the detection power supply 141 is disposed close to the second end 42. For example, as shown in FIG. 4, the negative electrode of the detection power supply 141 is connected to the first end 141, the positive electrode of the detection power supply 141 is connected to a current input end of the digital unit 142, and a current output end of the digital unit 142 is connected to the second end 42. It may be understood that, in another possible implementation, the current input end of the digital unit 142 may be connected to the first end 41, the current output end of the digital unit 142 may be connected to the negative electrode of the detection power supply 141, and the positive electrode of the detection power supply 141 may be connected to the second end 42.

It can be learned from FIG. 4 that, because the detection power supply 141 can make an electric potential at the second end 42 greater than that at the first end 41, when the anti-backflow circuit 12 fails, the anti-backflow circuit 12 may transmit electric energy from an output end (connected to the second end 42) to an input end (connected to the first end 41). Therefore, a current loop may be formed between the first end 41 and the second end 42 of the detection circuit 14, and a detection current is transmitted between the first end 41 and the second end 42. FIG. 4 is used as an example. When the anti-backflow circuit 12 fails, a detection current is output from the positive electrode of the detection power supply 141, and flows back to the negative electrode of the detection power supply 141 after being successively transmitted by the digital unit 142 and the anti-backflow circuit 12.

The digital unit 142 includes a signal output end. When transmitting the detection current, the digital unit 142 may output a first level signal S1 by using the signal output end. The first level signal S1 may indicate that the anti-backflow circuit 12 fails. For example, the digital unit 142 may output a digital signal, and the digital signal mainly includes a high-level signal and a low-level signal. In this embodiment of this application, the first level signal S1 may be any level signal in the digital signal. This is not limited in embodiments of this application.

It may be understood that, when the anti-backflow circuit 12 does not fail, a current loop cannot be formed between the first end 41 and the second end 42. Therefore, no detection current is transmitted between the first end 41 and the second end 42. In this embodiment of this application, the digital unit 142 may further output a second level signal S2 when the digital unit 142 does not transmit a detection current. The second level signal S2 may indicate that the anti-backflow circuit 12 does not fail.

The second level signal S2 may be a signal corresponding to the first level signal S1. For example, if the first level signal S1 is a high-level signal, the second level signal S2 is a low-level signal. For another example, if the first level signal S1 is a low-level signal, the second level signal S2 is a high-level signal. In other words, the digital unit 142 may output a digital signal. When the digital signal is at a first level, it may indicate that the anti-backflow circuit 12 fails; and when the digital signal is at a second level, it may indicate that the anti-backflow circuit 12 does not fail.

In conclusion, this embodiment of this application provides the detection circuit 14. The detection power supply 141 and the digital unit 142 are disposed in the detection circuit 14. When the detection current is transmitted between the first end 41 and the second end 42 of the detection circuit 14, the digital unit 142 may output the first level signal to indicate that the anti-backflow circuit 12 fails. In this embodiment of this application, the first level signal is generated based on the detection current. The detection circuit 14 only needs to distinguish whether there is a detection current, and does not need to further detect the detection current. Therefore, compared with the solution shown in FIG. 3, a detection result of the detection circuit 14 provided in this embodiment of this application may not depend on detection precision of a voltage value. This helps improve accuracy of failure detection of the anti-backflow circuit 12.

In addition, the detection circuit 14 provided in this embodiment of this application does not depend on an input voltage and an output voltage of the anti-backflow circuit 12 to perform detection. Therefore, the detection circuit 14 may perform failure detection before a charging pile 20 is connected to a power battery 30. This further helps protect safety of an electric vehicle.

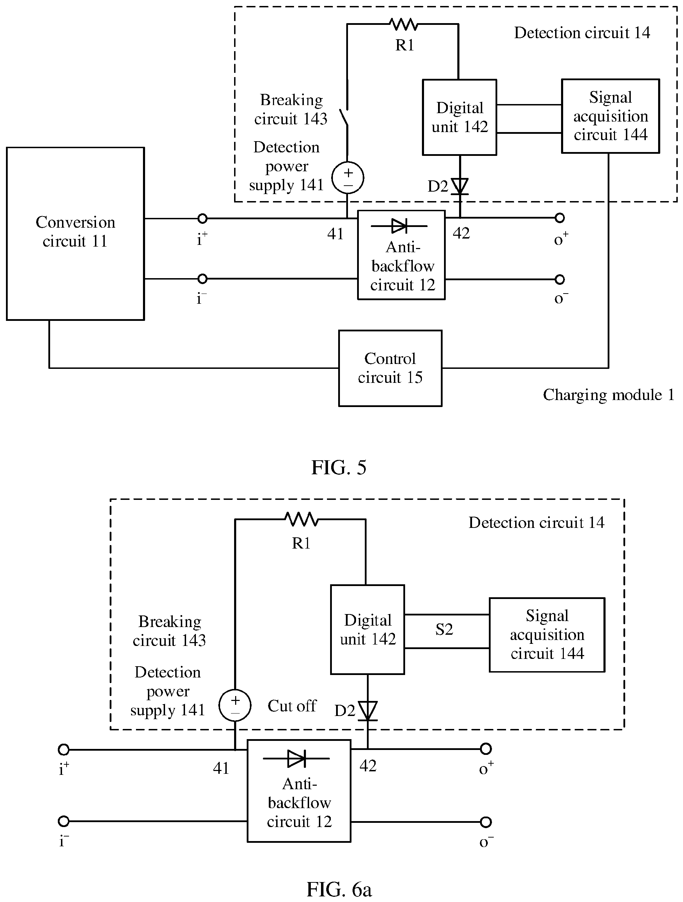

To prolong a service life of the detection circuit 14, in a possible implementation, as shown in FIG. 5, the detection circuit 14 may further include a breaking circuit 143, and the breaking circuit 143 is connected in series to both the detection power supply 141 and the digital unit 142. For example, the breaking circuit 143 may be a circuit that includes a switching element such as a relay or a switching transistor and that has a switching function. This is not limited in embodiments of this application.

In a specific implementation, as shown in FIG. 5, the breaking circuit 143 is located between the detection power supply 141 and the digital unit 142, one end of the breaking circuit 143 is connected to the detection power supply 141, and the other end of the breaking circuit 143 is connected to the digital unit 142. It may be understood that, another possible structure may alternatively be connected in series between two of the breaking circuit 143, the detection power supply 141, and the digital unit 142. These are not listed in embodiments of this application one by one.

In this embodiment of this application, the breaking circuit 143 may be connected during failure detection of the anti-backflow circuit, so that a current loop can be formed between the first end 41 and the second end 42 of the detection circuit 14 when the anti-backflow circuit 12 fails. The breaking circuit 143 may also be disconnected after failure detection of the anti-backflow circuit 12 ends. This helps prolong the service life of the detection circuit 14.

As described above, the output end of the anti-backflow circuit 12 is connected to the power battery 30. Because the second end 42 of the detection circuit 14 is connected to the high-electric-potential output end o⁺ of the anti-backflow circuit 12, electric energy of the power battery 30 may flow back to the detection circuit 14, and the detection circuit 14 may be damaged.

In view of this, the detection circuit 14 may further include a detection diode D2. The detection diode D2 is connected in series to both the detection power supply 141 and the digital unit 142. In addition, an anode of the detection diode D2 may receive the detection current, and a cathode of the detection diode D2 may output the detection current. In other words, the detection diode D2 does not block transmission of the detection current. However, during backflow of the power battery 30 to the detection circuit 14, if the detection diode D2 is not disposed, a backflow current is input from the second end 42 of the detection circuit 14, and is output from the first end of the detection circuit 14. Therefore, in this embodiment of this application, the detection diode D2 may be disposed to block transmission of the backflow current in the detection circuit 14. This helps prevent backflow of the power battery 30 to the detection circuit 14.

In a specific implementation structure, as shown in FIG. 5, the anode of the detection diode D2 is connected to the current output end of the digital unit 142, and the cathode of the detection diode D2 is connected to the second end 42. It may be understood that, another possible structure may alternatively be connected in series between two of the detection diode D2, the detection power supply 141, and the digital unit 142. These are not listed in embodiments of this application one by one.

To prevent a large detection current from damaging the digital unit 142, in a possible implementation, the detection circuit 14 may further include a detection circuit R1, and the detection resistor R1 is connected in series to both the detection power supply 141 and the digital unit 142. The detection resistor R1 may perform current limiting on the detection current. This helps prevent the digital unit 142 from being damaged due to an excessively large detection current.

In a specific implementation structure, as shown in FIG. 5, one end of the detection resistor R1 is connected to the detection power supply 141 (through the breaking circuit 143), and the other end of the detection resistor R1 is connected to the current input end of the digital unit 142. It may be understood that, another possible structure may alternatively be connected in series between two of the detection resistor R1, the detection power supply 141, and the digital unit 142. These are not listed in embodiments of this application one by one.

In the detection circuit 14 provided in this embodiment of this application, the digital unit 142 may output a digital signal. The digital signal may be the first level signal S1 or the second level signal S2. The digital signal output by the digital unit 142 may be transmitted to a control circuit 15 (as shown in FIG. 2 and FIG. 5) of the charging module 1, and the control circuit 15 determines, based on a level of the digital signal, whether the anti-backflow circuit 12 fails.

The control circuit 15 may be a circuit having a logical operation capability, and is a control chip in the charging module 1. For example, the control circuit 15 may be a control component such as a processor, a microprocessor, or a controller. For example, the control circuit 15 may be a general-purpose central processing unit (central processing unit, CPU), a general-purpose processor, digital signal processing (digital signal processing, DSP), an application-specific integrated circuit (application specific integrated circuits, ASIC), a field programmable gate array (field programmable gate array, FPGA), or another programmable logic device, a transistor logic device, a hardware component, or any combination thereof.

The control circuit 15 may control a conversion circuit 11 to perform voltage conversion. In this embodiment of this application, the control circuit 15 may make the breaking circuit 143 connected before the conversion circuit 11 outputs direct current electric power, so that failure detection can be performed on the anti-backflow circuit 12 by using the detection circuit 14.

In a failure detection process, if the control circuit 15 receives the first level signal S1, it indicates that the anti-backflow circuit 12 fails. In this case, the control circuit 15 may prohibit the conversion circuit 11 from outputting the direct current electric power. The control circuit 15 may further control the charging module 1 to send alarm information, to provide maintenance information for management personnel. If the control circuit 15 receives the second level signal S2, it indicates that the anti-backflow circuit 12 does not fail in this case. In this case, the control circuit 15 may control the conversion circuit 11 to start to output the direct current electric power.

Generally, the control circuit 15 is a digital circuit, and may process a digital signal. However, a level signal output by the digital unit 142 may be difficult to be identified by the control circuit 15 due to an irregular waveform. In view of this, as shown in FIG. 5, the detection circuit 14 may further include a signal acquisition circuit 144. The signal acquisition circuit 144 is connected to the signal output end of the digital unit 142. The signal acquisition circuit 144 may perform shaping filtering on the first level signal S1 or the second level signal S2 output by the digital unit 142. After shaping filtering is performed, a waveform of a digital signal output by the digital unit 142 is more regular, so that the control circuit 15 can identify the first level signal S1 or the second level signal S2 more accurately.

Next, the detection circuit 14 shown in FIG. 5 is used as an example. Failure detection processes in a scenario in which the anti-backflow circuit 12 fails and a scenario in which the anti-backflow circuit 12 does not fail are further described by using examples.

### Scenario 1: The anti-backflow circuit 12 does not fail.

As shown in FIG. 6a, during failure detection of the anti-backflow circuit 12, the breaking circuit 143 is connected. The detection power supply 141 may apply bias voltages to the first end 41 and the second end 42 to make an electric potential at the second end 42 higher than that at the first end 41. When the anti-backflow circuit 12 does not fail, the anti-backflow circuit 12 cannot transmit electric energy from the output end to the input end. In other words, because the electric potential at the second end 42 is higher than that at the first end 41, when the anti-backflow circuit 12 does not fail, the anti-backflow circuit 12 is cut off in a direction from the second end 42 to the first end 41. In this way, a current loop cannot be formed between the first end 41 and the second end 42, and no detection current is transmitted in the digital unit 142. Therefore, the digital unit 142 may output a second level signal S2.

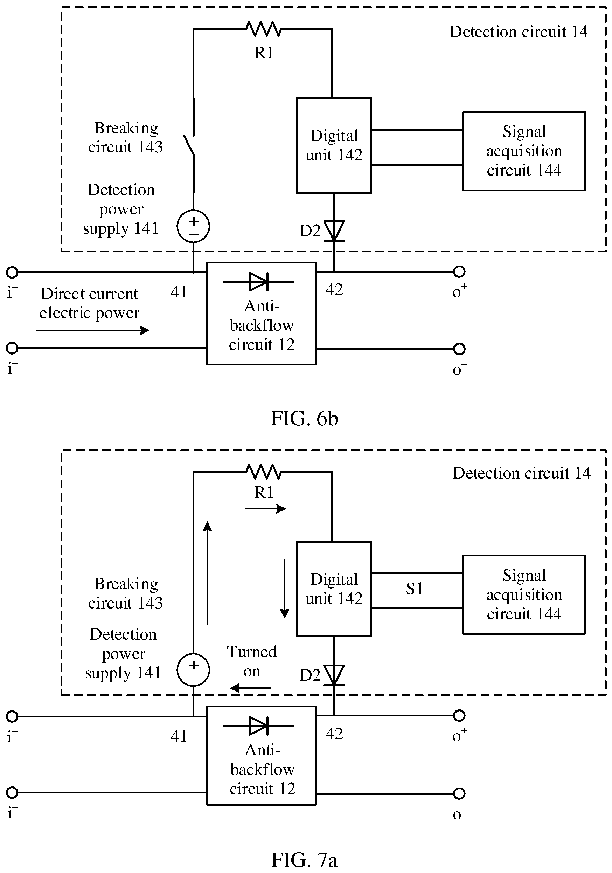

After performing shaping filtering on the second level signal S2, the signal acquisition circuit 144 further transmits the second level signal S2 to the control circuit 15. As shown in FIG. 6b, after receiving the second level signal S2, the control circuit 15 may make the breaking circuit 143 disconnected, and control the conversion circuit 11 to output direct current electric power. After being transmitted by the anti-backflow circuit 12, the direct current electric power is output to the charging pile 20.

### Scenario 2: The anti-backflow circuit 12 fails.

As shown in FIG. 7a, during failure detection of the anti-backflow circuit 12, the breaking circuit 143 is connected. The detection power supply 141 may apply bias voltages to the first end 41 and the second end 42 to make an electric potential at the second end 42 higher than that at the first end 41. When the anti-backflow circuit 12 fails, the anti-backflow circuit 12 may transmit electric energy from the output end to the input end. In other words, because the electric potential at the second end 42 is higher than that at the first end 41, when the anti-backflow circuit 12 fails, the anti-backflow circuit 12 is connected in a direction from the second end 42 to the first end 41. In this way, a current loop can be formed between the first end 41 and the second end 42.

As shown by an arrow in FIG. 7a, a detection current may be output from the positive electrode of the detection power supply 141, and is input to the output end of the anti-backflow circuit 12 from the second end 42 after being successively transmitted by the breaking circuit 143, the detection resistor R1, the digital unit 142, and the detection diode D2. Because the anti-backflow circuit 12 fails, in the anti-backflow circuit 12, the detection current is transmitted from the output end of the anti-backflow circuit 12 to the input end of the anti-backflow circuit 12, and then is input to the detection circuit 14 from the first end 41, to flow back to the negative electrode of the detection power supply 141. Therefore, when the anti-backflow circuit 12 fails, a current loop for transmitting the detection current may be formed between the first end 41 and the second end 42.

In this case, the detection current is transmitted through the digital unit 142. When transmitting the detection current, the digital unit 142 may output a first level signal S1.

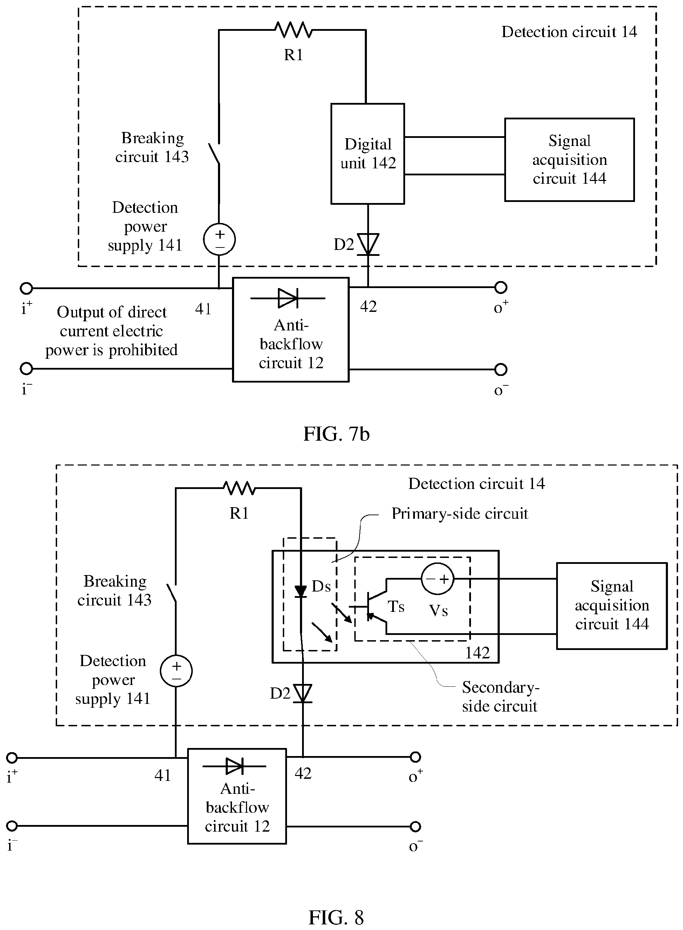

After performing shaping filtering on the first level signal S1, the signal acquisition circuit 144 further transmits the first level signal S1 to the control circuit 15. As shown in FIG. 7b, after receiving the first level signal S1, the control circuit 15 may make the breaking circuit 143 disconnected, and forbid the conversion circuit 11 from outputting direct current electric power.

The foregoing uses the examples to describe the failure detection processes to which the detection circuit 14 provided in this embodiment of this application is applicable. It can be learned from the foregoing examples that, the digital unit 142 in this embodiment of this application may output the first level signal S1 when transmitting the detection current, and output the second level signal S2 when the digital unit 142 does not transmit a detection current.

In a possible implementation, the digital unit 142 provided in this embodiment of this application may further use an isolation structure to enhance anti-electromagnetic interference performance of the charging module 1. As described above, the conversion circuit 11 may further include an EMI filter circuit. The EMI filter circuit may filter out electromagnetic interference in direct current electric power output by the conversion circuit 11. However, as shown in FIG. 5, the control circuit 15 is connected to both the conversion circuit 11 and the digital unit 142, and some electromagnetic interference is directly output from the charging module 1 after being transmitted through the control circuit 15, the digital unit 142, and the detection diode D2. The electromagnetic interference bypasses the EMI filter circuit. In this case, there is electromagnetic interference in direct current electric power output by the charging module 1. This is not conducive to improvement of anti-electromagnetic interference performance of the charging module 1.

In view of this, in this embodiment of this application, the digital unit 142 may use an isolation structure to block a path used for transmitting electromagnetic interference through the digital unit 142. For example, the digital unit 142 may include a primary-side circuit and a secondary-side circuit, and the primary-side circuit and the secondary-side circuit are isolated from each other. The isolation means that a current cannot be directly transmitted between the primary-side circuit and the secondary-side circuit. This helps suppress electromagnetic interference from being directly output from the charging module 1 through the control circuit 15 and the detection circuit 14. The primary-side circuit may transmit the detection current, and the secondary-side circuit may output the first level signal when the primary-side circuit transmits the detection current. When the primary-side circuit does not transmit a detection current, the secondary-side circuit may also output the second level signal.

For example, although the primary-side circuit and the secondary-side circuit are isolated from each other, coupling in a form of an energy field, for example, optical coupling, magnetic coupling, or electric field coupling, may be implemented between the primary-side circuit and the secondary-side circuit. When the detection current passes through the primary-side circuit, the secondary-side circuit may sense an energy change in the primary-side circuit by using an energy field, to generate the first level signal.

In a specific example, the primary-side circuit and the secondary-side circuit are optically coupled, and the isolation between the primary-side circuit and the secondary-side circuit may also be referred to as optical isolation. As shown in FIG. 8, the primary-side circuit includes a light-emitting diode Ds, an anode of the light-emitting diode Ds may receive the detection current, a cathode of the light-emitting diode Ds may output the detection current, and the light-emitting diode Ds may emit light when transmitting the detection current.

In other words, the anode of the light-emitting diode Ds may be used as the current input end of the digital unit 142, and the cathode of the light-emitting diode Ds may be used as the current output end of the digital unit 142. When a detection current is transmitted in the detection circuit 14, the light-emitting diode Ds may be kept on.

In FIG. 8, the anode of the light-emitting diode Ds is connected to the detection resistor R1, and the cathode of the light-emitting diode Ds is connected to the anode of the detection diode D2. It may be understood that, FIG. 8 is merely a specific example, and another structure may alternatively be connected in series between the light-emitting diode Ds and another element in the detection circuit 14. These are not listed in embodiments of this application one by one.

The secondary-side circuit includes a light-sensing switching transistor Ts, and the light-sensing switching transistor may sense a light-emitting status of the light-emitting diode Ds. When the light-emitting diode Ts emits light, the light-sensing switching transistor Ts is turned on, so that the secondary-side circuit outputs the first level signal. In a specific example, the secondary-side circuit may further include a signal source Vs, and the signal source Vs may be a stable direct current power supply. When the light-sensing switching transistor Ts is turned on, the signal source Vs may output the first level signal. In this case, the first level signal is a high level. When the light-sensing switching transistor Ts is turned off, that is, when the light-emitting diode Ds does not transmit a detection current, the signal source Vs stops outputting the first level signal, and a level of a digital signal output by the secondary-side circuit is reduced to a low level. An obtained signal is the second level signal.

It may be understood that, the isolation between the primary-side circuit and the secondary-side circuit may alternatively be magnetic isolation. To be specific, magnetic coupling is implemented between the primary-side circuit and the secondary-side circuit. The isolation between the primary-side circuit and the secondary-side circuit may alternatively be capacitive isolation. To be specific, the primary-side circuit and the secondary-side circuit are coupled by using a capacitive electric field. Both magnetic isolation and capacitive isolation have mature applications in a signal isolation transmission chip. Details are not described in embodiments of this application.

Obviously, a person skilled in the art can make various modifications and variations to this application without departing from the protection of this invention as long as they fall within the scope of the invention as defined by the appended claims.

## Claims

1. A detection circuit (14), wherein the detection circuit (14) is configured to perform failure detection on an anti-backflow circuit (12), a first end (14, 41, 141) of the detection circuit (14) is configured to be connected to a high-electric-potential input end of the anti-backflow circuit (12), a second end (42) of the detection circuit (14) is configured to be connected to a high-electric-potential output end of the anti-backflow circuit (12), and the detection circuit (14) comprises a detection power supply (141) and a digital unit (142), wherein
the detection power supply (141) and the digital unit (142) are connected in series between the first end (14, 41, 141) of the detection circuit (14) and the second end (42) of the detection circuit (14);
the detection power supply (141) is configured to apply bias voltages to the first end (14, 41, 141) and the second end (42) of the detection circuit (14) to make an electric potential at the second end (42) of the detection circuit (14) higher than that at the first end (14, 41, 141) of the detection circuit (14); and
the digital unit (142) is configured to output a digital signal having a first level or a second level, wherein it outputs the first level signal when transmitting a detection current, wherein the first level signal is used to indicate that the anti-backflow circuit fails, and the detection current is a current transmitted between the first end (14, 41, 141) and the second end (42) of the detection circuit (14) when a current loop is formed between the first end (14, 41, 141) and the second end (42) of the detection circuit (14);
wherein the digital unit (142) is further configured to output the second level signal when the digital unit (142) does not transmit a detection current, wherein the second level signal is used to indicate that the anti-backflow circuit (12) does not fail;
wherein the detection circuit (14) further comprises a detection diode (D2), and the detection diode is connected in series to both the detection power supply (141) and the digital unit (142); and
an anode of the detection diode is configured to receive the detection current, and a cathode of the detection diode is configured to output the detection current.

2. The detection circuit (14) according to claim 1, wherein the digital unit (142) comprises a current input end, a current output end, and a signal output end;
a positive electrode of the detection power supply (141) is connected to the current input end of the digital unit (142), and a negative electrode of the detection power supply (141) is connected to the first end (14, 41, 141) of the detection circuit (14);
the current output end of the digital unit (142) is connected to the second end (42) of the detection circuit (14); and
the signal output end of the digital unit (142) is configured to output the first level signal.

3. The detection circuit (14) according to any one of claims 1 to 2, wherein the detection circuit (14) further comprises a breaking circuit (143), and the breaking circuit (143) is connected in series to both the detection power supply (141) and the digital unit (142);
and the breaking circuit (143) is configured to be controlled by a control circuit (15) to:
be connected during failure detection of the anti-backflow circuit (12); and
be disconnected when the failure detection ends.

4. The detection circuit (14) according to any one of claims 1 to 3, wherein the detection circuit (14) further comprises a detection resistor, and the detection resistor is connected in series to both the detection power supply (141) and the digital unit (142).

5. The detection circuit (14) according to any one of claims 1 to 4, wherein the digital unit (142) comprises a primary-side circuit and a secondary-side circuit, and the secondary-side circuit and the primary-side circuit are isolated from each other, wherein
the primary-side circuit is configured to transmit the detection current; and
the secondary-side circuit is configured to output the first level signal when the primary-side circuit transmits the detection current.

6. The detection circuit (14) according to claim 5, wherein the primary-side circuit comprises a light-emitting diode, an anode of the light-emitting diode is configured to receive the detection current, a cathode of the light-emitting diode is configured to output the detection current, and the light-emitting diode is configured to emit light when transmitting the detection current; and
the secondary-side circuit comprises a light-sensing switching transistor, and the light-sensing switching transistor is configured to be turned on when the light-emitting diode emits light, so that the secondary-side circuit outputs the first level signal.

7. The detection circuit (14) according to any one of claims 1 to 6, wherein the detection circuit (14) further comprises a signal acquisition circuit (144), and the signal acquisition circuit (144) is configured to perform shaping filtering on the first level signal.

8. An anti-backflow system, comprising an anti-backflow circuit (12) and the detection circuit (14) according to any one of claims 1 to 7, wherein
a first end (14, 41, 141) of the detection circuit (14) is connected to a high-electric-potential input end of the anti-backflow circuit (12), and a second end (42) of the detection circuit (14) is connected to a high-electric-potential output end of the anti-backflow circuit (12).

9. A charging pile (10, 20), comprising a conversion circuit (11) and the anti-backflow system according to claim 8, wherein
the conversion circuit (11) is configured to: convert received alternating current electric power into direct current electric power, and output the converted direct current electric power to an anti-backflow circuit (12); and
the anti-backflow circuit (12) is configured to output the direct current electric power.

10. The charging pile (10, 20) according to claim 9, when dependent on claim 3, wherein the charging pile (10, 20) further comprises the control circuit (15), and the control circuit (15) is connected to both the conversion circuit (11) and a digital unit (142); and
the control circuit (15) is configured to:
after receiving a first level signal, prohibit the conversion circuit (11) from outputting the direct current electric power.

## Patentansprüche

1. Detektionsschaltung (14), wobei die Detektionsschaltung (14) konfiguriert ist zum Durchführen von Fehlerdetektion an einer Rückflussverhinderungsschaltung (12), ein erstes Ende (14, 41, 141) der Detektionsschaltung (14) konfiguriert ist, mit einem Eingangsende mit hohem elektrischem Potenzial der Rückflussverhinderungsschaltung (12) verbunden zu werden, ein zweites Ende (42) der Detektionsschaltung (14) konfiguriert ist, mit einem Ausgangsende mit hohem elektrischem Potenzial der Rückflussverhinderungsschaltung (12) verbunden zu werden, und die Detektionsschaltung (14) eine Detektionsleistungsversorgung (141) und eine digitale Einheit (142) umfasst, wobei
die Detektionsleistungsversorgung (141) und die digitale Einheit (142) in Reihe zwischen dem ersten Ende (14, 41, 141) der Detektionsschaltung (14) und dem zweiten Ende (42) der Detektionsschaltung (14) verbunden sind;
die Detektionsleistungsversorgung (141) konfiguriert ist zum Anlegen von Vorspannungsspannungen an das erste Ende (14, 41, 141) und das zweite Ende (42) der Detektionsschaltung (14), um ein elektrisches Potenzial an dem zweiten Ende (42) der Detektionsschaltung (14) höher als das an dem ersten Ende (14, 41, 141) der Detektionsschaltung (14) zu machen; und
die digitale Einheit (142) konfiguriert ist zum Ausgeben eines Digitalsignals, das einen ersten Pegel oder einen zweiten Pegel aufweist, wobei sie das Signal des ersten Pegels ausgibt, wenn sie einen Detektionsstrom überträgt, wobei das Signal des ersten Pegels verwendet wird, anzugeben, dass die Rückflussverhinderungsschaltung versagt, und der Detektionsstrom ein Strom ist, der zwischen dem ersten Ende (14, 41, 141) und dem zweiten Ende (42) der Detektionsschaltung (14) übertragen wird, wenn eine Stromschleife zwischen dem ersten Ende (14, 41, 141) und dem zweiten Ende (42) der Detektionsschaltung (14) gebildet ist;
wobei die digitale Einheit (142) ferner konfiguriert ist zum Ausgeben des Signals des zweiten Pegels, wenn die digitale Einheit (142) einen Detektionsstrom nicht überträgt, wobei das Signal des zweiten Pegels verwendet wird, anzugeben, dass die Rückflussverhinderungsschaltung (12) nicht versagt;
wobei die Detektionsschaltung (14) ferner eine Detektionsdiode (D2) umfasst und die Detektionsdiode in Reihe mit sowohl der Detektionsleistungsversorgung (141) als auch der digitalen Einheit (142) verbunden ist; und
eine Anode der Detektionsdiode konfiguriert ist zum Empfangen des Detektionsstroms und eine Kathode der Detektionsdiode konfiguriert ist zum Ausgeben des Detektionsstroms.

2. Detektionsschaltung (14) nach Anspruch 1, wobei die digitale Einheit (142) ein Stromeingangsende, ein Stromausgangsende und ein Signalausgangsende umfasst;
eine positive Elektrode der Detektionsleistungsversorgung (141) mit dem Stromeingangsende der digitalen Einheit (142) verbunden ist und eine negative Elektrode der Detektionsleistungsversorgung (141) mit dem ersten Ende (14, 41, 141) der Detektionsschaltung (14) verbunden ist;
das Stromausgangsende der digitalen Einheit (142) mit dem zweiten Ende (42) der Detektionsschaltung (14) verbunden ist; und
das Signalausgangsende der digitalen Einheit (142) konfiguriert ist zum Ausgeben des Signals des ersten Pegels.

3. Detektionsschaltung (14) nach einem der Ansprüche 1 bis 2, wobei die Detektionsschaltung (14) ferner eine Unterbrechungsschaltung (143) umfasst und die Unterbrechungsschaltung (143) in Reihe mit sowohl der Detektionsleistungsversorgung (141) als auch der digitalen Einheit (142) verbunden ist;
und die Unterbrechungsschaltung (143) konfiguriert ist, durch eine Steuerschaltung (15) gesteuert zu werden, um:
während Fehlerdetektion der Rückflussverhinderungsschaltung (12) verbunden zu werden; und
getrennt zu werden, wenn die Fehlerdetektion endet.

4. Detektionsschaltung (14) nach einem der Ansprüche 1 bis 3, wobei die Detektionsschaltung (14) ferner einen Detektionswiderstand umfasst und der Detektionswiderstand in Reihe mit sowohl der Detektionsleistungsversorgung (141) als auch der digitalen Einheit (142) verbunden ist.

5. Detektionsschaltung (14) nach einem der Ansprüche 1 bis 4, wobei die digitale Einheit (142) eine primärseitige Schaltung und eine sekundärseitige Schaltung umfasst und die sekundärseitige Schaltung und die primärseitige Schaltung voneinander isoliert sind, wobei
die primärseitige Schaltung konfiguriert ist zum Übertragen des Detektionsstroms; und die sekundärseitige Schaltung konfiguriert ist zum Ausgeben des Signals des ersten Pegels, wenn die primärseitige Schaltung den Detektionsstrom überträgt.

6. Detektionsschaltung (14) nach Anspruch 5, wobei die primärseitige Schaltung eine lichtemittierende Diode umfasst, eine Anode der lichtemittierenden Diode konfiguriert ist zum Empfangen des Detektionsstroms, eine Kathode der lichtemittierenden Diode konfiguriert ist zum Ausgeben des Detektionsstroms und die lichtemittierende Diode konfiguriert ist zum Emittieren von Licht, wenn sie den Detektionsstrom überträgt; und
die sekundärseitige Schaltung einen lichtempfindlichen Schalttransistor umfasst und der lichtempfindliche Schalttransistor konfiguriert ist, eingeschaltet zu werden, wenn die lichtemittierende Diode Licht emittiert, so dass die sekundärseitige Schaltung das Signal des ersten Pegels ausgibt.

7. Detektionsschaltung (14) nach einem der Ansprüche 1 bis 6, wobei die Detektionsschaltung (14) ferner eine Signalerfassungsschaltung (144) umfasst und die Signalerfassungsschaltung (144) konfiguriert ist zum Durchführen von Formfilterung an dem Signal des ersten Pegels.

8. Rückflussverhinderungssystem, umfassend eine Rückflussverhinderungsschaltung (12) und die Detektionsschaltung (14) nach einem der Ansprüche 1 bis 7, wobei ein erstes Ende (14, 41, 141) der Detektionsschaltung (14) mit einem Eingangsende mit hohem elektrischem Potenzial der Rückflussverhinderungsschaltung (12) verbunden ist und ein zweites Ende (42) der Detektionsschaltung (14) mit einem Ausgangsende mit hohem elektrischem Potenzial der Rückflussverhinderungsschaltung (12) verbunden ist.

9. Ladesäule (10, 20), umfassend eine Umwandlungsschaltung (11) und das Rückflussverhinderungssystem nach Anspruch 8, wobei
die Umwandlungsschaltung (11) konfiguriert ist zum: Umwandeln von empfangener elektrischer Wechselstromleistung in elektrische Gleichstromleistung und Ausgeben der umgewandelten elektrischen Gleichstromleistung an eine Rückflussverhinderungsschaltung (12); und
die Rückflussverhinderungsschaltung (12) konfiguriert ist zum Ausgeben der elektrischen Gleichstromleistung.

10. Ladesäule (10, 20) nach Anspruch 9, wenn abhängig von Anspruch 3, wobei die Ladesäule (10, 20) ferner die Steuerschaltung (15) umfasst und die Steuerschaltung (15) mit sowohl der Umwandlungsschaltung (11) als auch einer digitalen Einheit (142) verbunden ist; und
die Steuerschaltung (15) konfiguriert ist zum:
nach Empfangen eines Signals des ersten Pegels Verhindern, dass die Umwandlungsschaltung (11) die elektrische Gleichstromleistung ausgibt.

## Revendications

1. Circuit de détection (14), le circuit de détection (14) étant configuré pour effectuer une détection de défaillance sur un circuit antireflux (12), une première extrémité (14, 41, 141) du circuit de détection (14) étant configurée pour être connectée à une extrémité d'entrée à haut potentiel électrique du circuit antireflux (12), une seconde extrémité (42) du circuit de détection (14) étant configurée pour être connectée à une extrémité de sortie à haut potentiel électrique du circuit antireflux (12), et le circuit de détection (14) comprenant une alimentation de détection (141) et une unité numérique (142),
l'alimentation de détection (141) et l'unité numérique (142) étant connectées en série entre la première extrémité (14, 41, 141) du circuit de détection (14) et la seconde extrémité (42) du circuit de détection (14) ;
l'alimentation de détection (141) étant configurée pour appliquer des tensions de polarisation à la première extrémité (14, 41, 141) et à la seconde extrémité (42) du circuit de détection (14) pour rendre un potentiel électrique à la seconde extrémité (42) du circuit de détection (14) supérieur à celui à la première extrémité (14, 41, 141) du circuit de détection (14) ; et
l'unité numérique (142) étant configurée pour produire un signal numérique ayant un premier niveau ou un second niveau, celle-ci produisant le signal de premier niveau lors de la transmission d'un courant de détection, le signal de premier niveau étant utilisé pour indiquer que le circuit antireflux défaille, et le courant de détection étant un courant transmis entre la première extrémité (14, 41, 141) et la seconde extrémité (42) du circuit de détection (14) lorsqu'une boucle de courant est formée entre la première extrémité (14, 41, 141) et la seconde extrémité (42) du circuit de détection (14) ;
l'unité numérique (142) étant en outre configurée pour produire le signal de second niveau lorsque l'unité numérique (142) ne transmet pas de courant de détection, le signal de second niveau étant utilisé pour indiquer que le circuit antireflux (12) ne défaille pas ;
le circuit de détection (14) comprenant en outre une diode de détection (D2), et la diode de détection étant connectée en série à la fois à l'alimentation de détection (141) et à l'unité numérique (142) ; et
une anode de la diode de détection étant configurée pour recevoir le courant de détection, et une cathode de la diode de détection étant configurée pour produire le courant de détection.

2. Circuit de détection (14) selon la revendication 1, l'unité numérique (142) comprenant une extrémité d'entrée de courant, une extrémité de sortie de courant, et une extrémité de sortie de signal ;
une électrode positive de l'alimentation de détection (141) étant connectée à l'extrémité d'entrée de courant de l'unité numérique (142), et une électrode négative de l'alimentation de détection (141) étant connectée à la première extrémité (14, 41, 141) du circuit de détection (14) ;
l'extrémité de sortie de courant de l'unité numérique (142) étant connectée à la seconde extrémité (142) du circuit de détection (14) ; et
l'extrémité de sortie de signal de l'unité numérique (142) étant configurée pour produire le signal de premier niveau.

3. Circuit de détection (14) selon l'une quelconque des revendications 1 et 2, le circuit de détection (14) comprenant en outre un circuit de rupture (143), et le circuit de rupture (143) étant connecté en série à la fois à l'alimentation de détection (141) et à l'unité numérique (142) ;
et le circuit de rupture (143) étant configuré pour être commandé par un circuit de commande (15) pour :
être connecté pendant la détection de défaillance du circuit antireflux (12) ; et
être déconnecté lorsque la détection de défaillance se termine.

4. Circuit de détection (14) selon l'une quelconque des revendications 1 à 3, le circuit de détection (14) comprenant en outre une résistance de détection, et la résistance de détection étant connectée en série à la fois à l'alimentation de détection (141) et à l'unité numérique (142).

5. Circuit de détection (14) selon l'une quelconque des revendications 1 à 4, l'unité numérique (142) comprenant un circuit côté primaire et un circuit côté secondaire, et le circuit côté secondaire et le circuit côté primaire étant isolés l'un de l'autre,
le circuit côté primaire étant configuré pour transmettre le courant de détection ; et
le circuit côté secondaire étant configuré pour produire le signal de premier niveau lorsque le circuit côté primaire transmet le courant de détection.

6. Circuit de détection (14) selon la revendication 5, le circuit côté primaire comprenant une diode électroluminescente, une anode de la diode électroluminescente étant configurée pour recevoir le courant de détection, une cathode de la diode électroluminescente étant configurée pour produire le courant de détection, et la diode électroluminescente étant configurée pour émettre de la lumière lors de la transmission du courant de détection ; et
le circuit côté secondaire comprenant un transistor de commutation photosensible, et le transistor de commutation photosensible étant configuré pour être activé lorsque la diode électroluminescente émet de la lumière, de sorte que le circuit côté secondaire produit le signal de premier niveau.

7. Circuit de détection (14) selon l'une quelconque des revendications 1 à 6, le circuit de détection (14) comprenant en outre un circuit d'acquisition de signal (144), et le circuit d'acquisition de signal (144) étant configuré pour effectuer un filtrage de mise en forme sur le signal de premier niveau.

8. Système antireflux, comprenant un circuit antireflux (12) et le circuit de détection (14) selon l'une quelconque des revendications 1 à 7,
une première extrémité (14, 41, 141) du circuit de détection (14) étant connectée à une extrémité d'entrée à haut potentiel électrique du circuit antireflux (12), et une seconde extrémité (42) du circuit de détection (14) étant connectée à une extrémité de sortie à haut potentiel électrique du circuit antireflux (12).

9. Pile de charge (10, 20), comprenant un circuit de conversion (11) et le système antireflux selon la revendication 8,
le circuit de conversion (11) étant configuré pour : convertir l'énergie électrique en courant alternatif reçue en énergie électrique en courant continu, et fournir l'énergie électrique en courant continu convertie à un circuit antireflux (12) ; et
le circuit antireflux (12) étant configuré pour produire l'énergie électrique en courant continu.

10. Pile de charge (10, 20) selon la revendication 9, lorsqu'elle dépend de la revendication 3, la pile de charge (10, 20) comprenant en outre le circuit de commande (15), et le circuit de commande (15) étant connecté à la fois au circuit de conversion (11) et à une unité numérique (142) ; et
le circuit de commande (15) étant configuré pour :
après la réception d'un signal de premier niveau, interdire au circuit de conversion (11) de produire l'énergie électrique en courant continu.
